# EUROPEAN PATENT SPECIFICATION

(11) **EP 1 804 466 B1**
(45) Date of publication and mention of the grant of the patent: **17.02.2010**
(21) Application number: 05425917.1
(22) Date of filing: 27.12.2005
(51) Int. Cl.: H04L 29/08, G06F 9/445

(54) **Method for downloading software from a telecommunications management network**
Verfahren zur Softwareherunterladung von einem Telekommunikationsverwaltungsnetz
Méthode pour le téléchargement des logiciels provenant d'un réseau de gestion de télécommunication

(43) Date of publication of application: 04.07.2007
(73) Proprietor: Nokia Siemens Networks S.p.A., 20060 Cassina de'Pecchi (MI) (IT)
(72) Inventor: Fumagalli, Davide, 20149 Milano (IT); Premoli, Andrea Maria, 20069 Pozzo D'Adda (IT)
(74) Representative: Fischer, Michael

(56) References cited:
- WO-A-00/17749
- US-A- 4 847 830

## Description

### FIELD OF THE INVENTION

The present invention relates to the field of Telecommunication Networks, and more precisely to a method for downloading data from a Telecommunications Management Network (TMN) Operation System to the controlled equipments of the Telecommunications Network (TN).

### BACKGROUND ART

The concept of a TMN is defined in **Ref. [1]** of the Bibliographic References added at the end of the description. Accordingly, a TMN is conceptually a separate network that interfaces a TN at several different points to send/receive information to/from it and to control its operation. A TMN may use parts of the TN to provide its communications towards the various equipments inside the nodes.

Separating the management network from the telecommunication network prevents potential problems with fault management: even in the case of a failure in the telecommunication network, management will still be able to access the failing components. Data Communication Channels (DCC) are embedded into user data channels and their purpose is to transport all the TCP/IP TMN dedicated traffic. In this scenario each radio equipment is acting as a very small IP router, capable to forward datagrams, carrying supervisory data, over DCC's. Each equipment is fully managed by a microprocessor executing all the software applications needed to perform operation and maintenance stuff. The software, together with all the needed configuration parameters, is stored into the equipment on a "non-volatile" support, namely this memory is able to survive power loss (e.g. flash memory, e2prom).

Each time there is the need to upgrade either the software or some other data, some operations must be performed to transfer the upgraded version from the repository (the host where the data itself resides) to the equipments. Current data transfer is usually performed using a protocol called FTP (File Transport Protocol) [4], based on TCP/IP stack. Such protocol first establishes a connection between a client (the host where the info are contained), and a server (the host where the info will be transferred) and then performs data transfer itself. At the client side, the whole operation could be either human supervised or automated by means of a dedicated software. The equipments act as servers, whilst TMN Operation System acts as client, having the latter the database with all needed info and the knowledge of what data have to be to transferred to the equipments. The need to upgrade data without affecting the current operations (e.g. upgrading the software while the software itself is running) leads to use a double memory "bank": the first one (named "running") contains the actually used data; while the second one (named "standby") is available to store the new received data. The "standby" bank, once the corresponding data was validated at the end of the transfer procedure, could be switched to the "running" state by an explicit request of the TMN-OS.

Another known method is the "virus-like" download, where the info is spread
into the network without control, just "infecting" all the available neighbours with the new data.

### OUTLINED TECHNICAL PROBLEM/S

Microwaves networks have often a very large number of radio equipments, so the operation to transfer new data from the TMN-OS database (Central Repository) to the equipments could be a very expensive task, e.g. let's consider the case in which all equipments of the network have to be upgraded with a new software release.

This transfer may cause a double problem: the first problem concerns the TMN-OS, that will have to deal with a big number of concurrently transfer sessions; the second problem concerns the data transport network, that will have to transport an huge load of data, most of which are duplicated. The first problem is easy to understand if we think that the central repository controlling entity (TMN-OS) has to transfer the new data to each equipment involved, opening as many sessions as the number of equipments and controlling them.

The second problem depends strictly on the first, namely duplicated data (e.g. the same new software release to be transferred) have to be carried on the data transport network, being the session a point-to-point connection, the data will be transferred starting from the central repository once for each equipment, and each time it will transit through the same gateway(s) that could lead to bottlenecks.

There is also a third problem arising concerning the security. The security problem arises because the pair constituted by the user identity and his password has to be put on the data transport network one time for each equipment, in clear text if simple FTP session will be used, giving an attacker the way to spoof it more easily.

Virus-like downloads may solve all these problems but it suffers of a very important one: there is no way to control the data spread through the network.

Document US-A-4 847 830 (Nomirov et al, 1989) is an example of the art to which the invention pertains disclosing a process of retrieving a data set from neighbor nodes in a communication network including a first node and a plurality of neighbor nodes linked by communication channels to the first node.

Document WO 00/17749 (Ericsson INC, 2000) is a further example of the art to which the invention pertains disclosing a process for upgrading firmware in a peripherical device using a remote device.

### OBJECTS OF THE INVENTION

In view of the state of the art described for transferring data from a TMN Central Repository to the controlled equipments, it is an object of the present invention that to limit the work to be done by the TMN-OS, hosting the Central Repository of data, also reducing software complexity needed to control the whole transfer operation.

Another object of the present invention is that to limit data to be carried by data transport network to the essential, avoiding duplicated data and chances of bottlenecks, consequently.

Still another object of the present invention is that to maximize the control of the operation by the TMN OS, so that the operator will be both able to choose in details which equipments to involve and to be always informed about the status of the running transfers.

### SUMMARY AND ADVANTAGES OF THE INVENTION

The invention achieves said objects by providing a method for downloading data from a TMN OS to the controlled equipments inside the TN nodes, as disclosed in claim 1. Additional advantageous features are described in the dependent claims.

According to the downloading method of the invention, an equipment is allowed to get data directly from a neighbour, nevertheless keeping the strict control of the TMN OS, the overall procedure is fired up by simply instructing the equipment of which kind/version of data it has to look for and, when it was found, load it from one of its neighbours.

The task for the TMN OS Central Repository is so minimized to instruct each equipment with the data item info it has to get from neighbours. Then, after being informed about the status of the operation, it has to instruct the equipment to switch the standby memory bank to the running state.

Keeping these two phases separated allows the TMN OS to apply the chosen algorithm to perform the switch into running state (e.g. grouping equipments by geographical areas, choosing a low impact day-hour).

By putting for the very first time the needed data to the nearest equipment involved, said data are made available to the others by a domino propagation effect, saving the bandwidth of the data transport network: there is no more need to transport the same data through the nearest gateway(s) as many times as the number of the involved equipments. Data flow only where necessary, leaving the rest of network free to make its real work.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **fig.1** shows a block diagram of a SRAL-XD based Telecommunications Network suitable to implement the invention;
- **figures 2 to 7** show the domino propagation of updating data through a Telecommunications Network like the one of fig.1, according to the downloading method of the invention;
- **figures 8a-1**, **8a-2**, **8a3**, **8b1**, **8b2** reproduce some flow-charts of the downloading method of the invention.

### DETAILED DESCRIPTION OF AN EMBODIMENT OF THE INVENTION

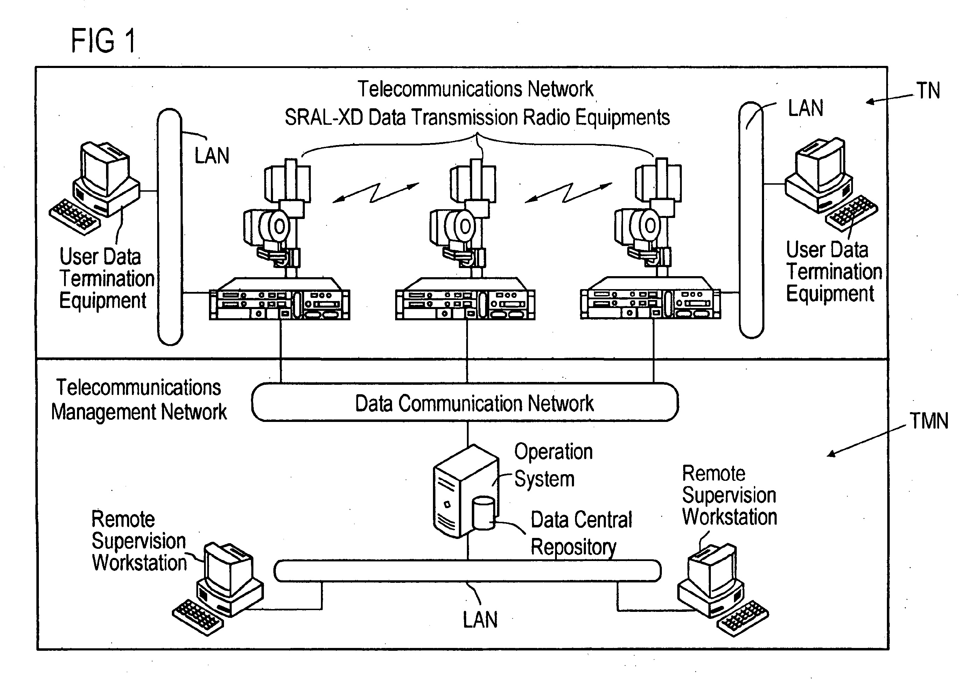

**Fig.1** shows a TN and its TMN. With reference to **fig.1**, the TN includes two LANs (Local Area Network) connected to each other through a radio link comprising three Data Transmission Radio Equipments, for example the Applicant's low capacity PDH (Plesiochronous Digital Hierarchy) microwaves equipments named SRAL-XD. Each LAN is interfaced to one or more User Data Termination Equipments constituted, for example, by Personal Computers. More in general, a schematization of the Telecommunication Network reported in Ref.[1] includes two terminal apparatuses connected by means of Exchanges and Transmission Systems interleaved to each other. The Telecommunication Management Network TMN includes the following elements: a Data Communication Network, one or more Operation Systems, and Remote Supervision Workstations constituted, for example, by Personal Computers.

In the operation, the interface points between the TMN and the TN are formed by Exchanges and Transmission systems. For the purpose of management, these interface points are connected to the Operations Systems via Data Communication Network. The TMN information architecture is based, in order to promote interoperability, on standardized open management paradigms that support the standardized modelling of the information to be communicated. For example, each SRAL-XD equipment has a dedicated TMN Element (NE) based on a single controller exchanging messages with all the other system units. The piece of information stored and processed by the internal controller is made available externally to the network operators through the following interfaces:
- RS232 towards a local PC, for an in-site management access.
- RS485 bus structured for connections of different SRAL-XDs located in the same site. An embedded Data Communication Channel (DCC), a 64 kbit/s channel in the radio frame overhead, provides the link towards gateway elements of TMN. When it is not possible directly connect the RS485 interfaces, a 64 kbit/s add-drop facility is available to use a slot of a 2 Mbit/s traffic signal.
- A 100BaseT Ethernet two-ports HUB interface to interconnect equipment in the same site over a LAN and to connect it to the TMN OS (if reachable).

The routing of the management information inside the SRAL-XD network is obtained by means of a TCP/IP protocol directly integrated within the radio controller, which also acts as an IP router. See **Ref.[2]** for IP (Internet Protocol) and **Ref.[3]** for TCP (Transport Control Protocol).

The Operations Systems perform most of the management functions; these functions may be carried out by human operators but also automatically. It is possible that multiple Operations Systems will perform a single management function. In this case, the Data Communication Network is also used to exchange management information between the Operation Systems. The Data Communication Network is also used to connect the Supervision Workstations, which allow operators to interpret management information.

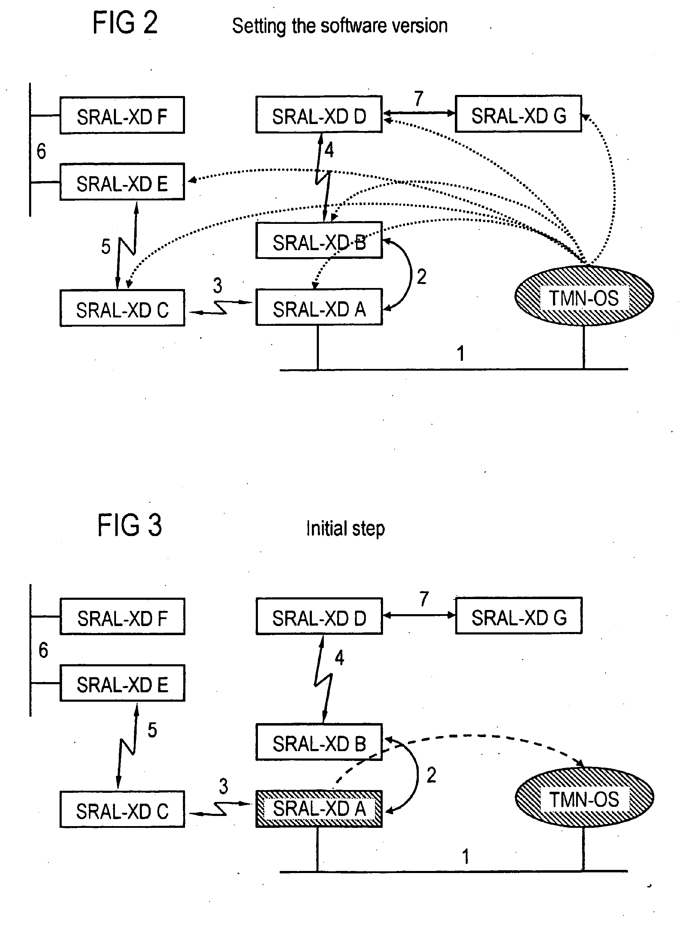

**Fig.2** shows a TN plus TMN derivable from the network of **fig.1****.** The TN part includes seven SRAL XD, labelled A to G, the TMN part includes the network manager labelled TMN-OS. The various Network Elements (NE) are connected to each other by means of links 1 to 7 indicated in the figure; without limitations, links 3, 4, and 5 are radio paths, the other are wired. With reference to **fig.2** when a new software has to be loaded into the equipments, the TMN-OS sets some information useful to address the load to all the radio equipments to be updated (see dotted arrows). From this moment the involved equipments start to continuously look their neighbours for the availability of the required software updating. In this example, the manager chose not to upgrade the radio equipment labeled SRAL XD F. The reduced set of information prevents the network to be overloaded.

**Fig.3** shows the initial downloading step of an updated version. New data are downloaded by TMN-OS using the usual procedure, in this particular case a FTP session is opened from the network manager towards the only radio equipment labelled "SRAL XD A" and the new software is loaded on it. This element can now declare the required software is available to all the equipments. In a more general case the TMN-OS selects a critical subset of equipments to the initial download. For instance the selection could be based on the evaluation of individual delays along the routing paths to reach all remote equipments, with the aim to minimize the overall downloading propagation delay.

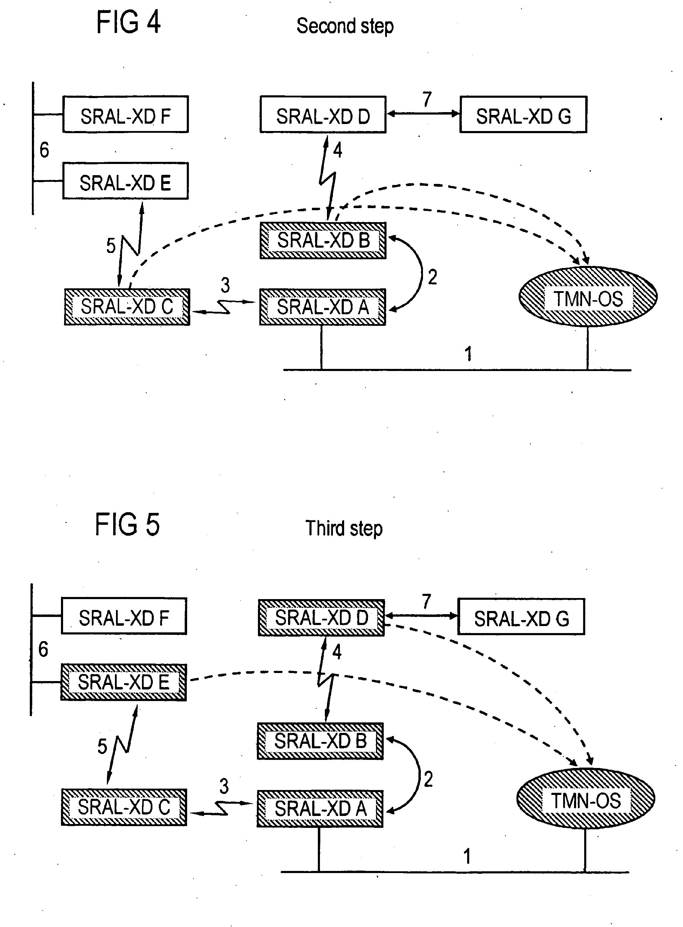

In **fig.4**, the network equipments SRAL XD B and SRAL XD C, that are looking for the new software version, find it now available on the SRAL XD A. They open an FTP session towards the found equipment SRAL XD A and retrieve the required file. It is worth to note that only the links labeled "2" and "3" are involved in the software load at this time, because the equipments search for the new software only among their neighbours. As soon as the software has been stored and validated, the equipments signal to the TMN-OS the end of operation (dashed arrows in figure).

In **fig.5** the updating step is performed towards the equipments SRAL XD E and SRAL XD D, neighbours of SRAL XD C and SRAL XD B, respectively.

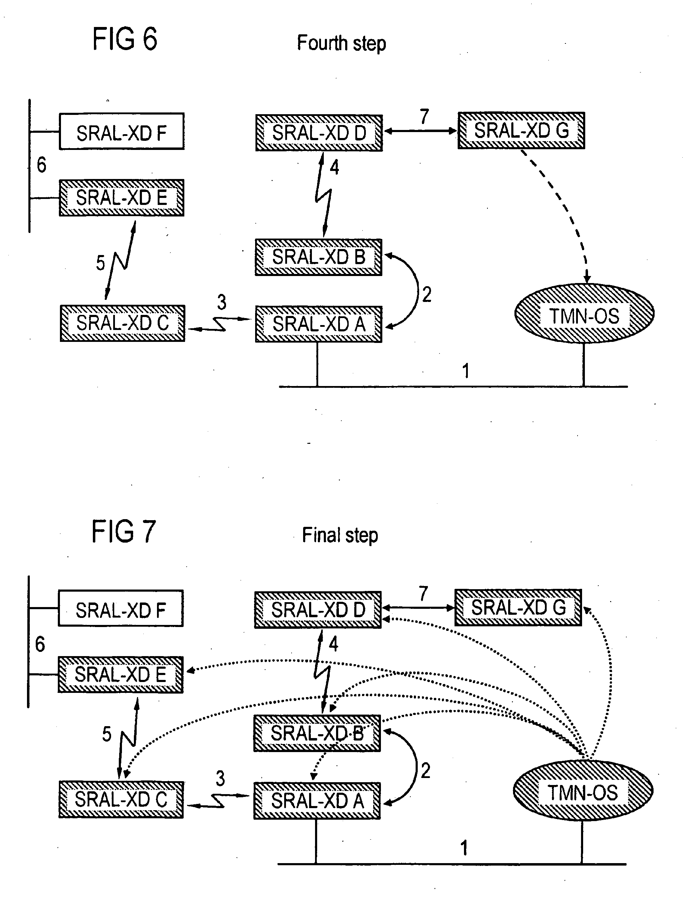

In **fig.6** the updating step is performed towards the equipment SRAL XD G neighbour of SRAL XD D and the updating process is completed.

In **fig.7** as soon as all equipments have signalled to the TMN-OS that the new software release has been stored, the manager is able to instruct them to make the new software running (dotted arrows in figure).

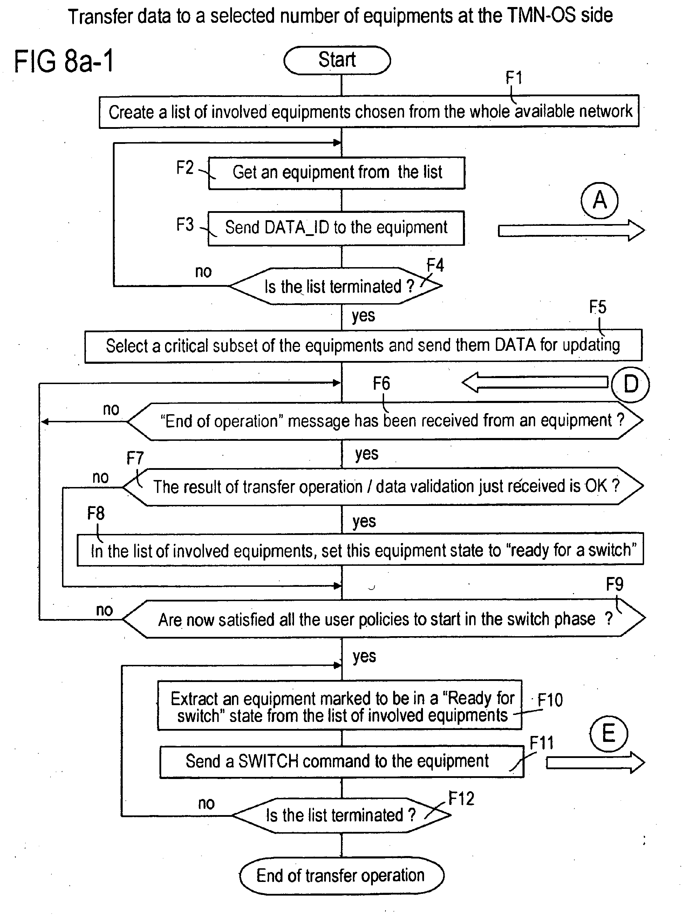

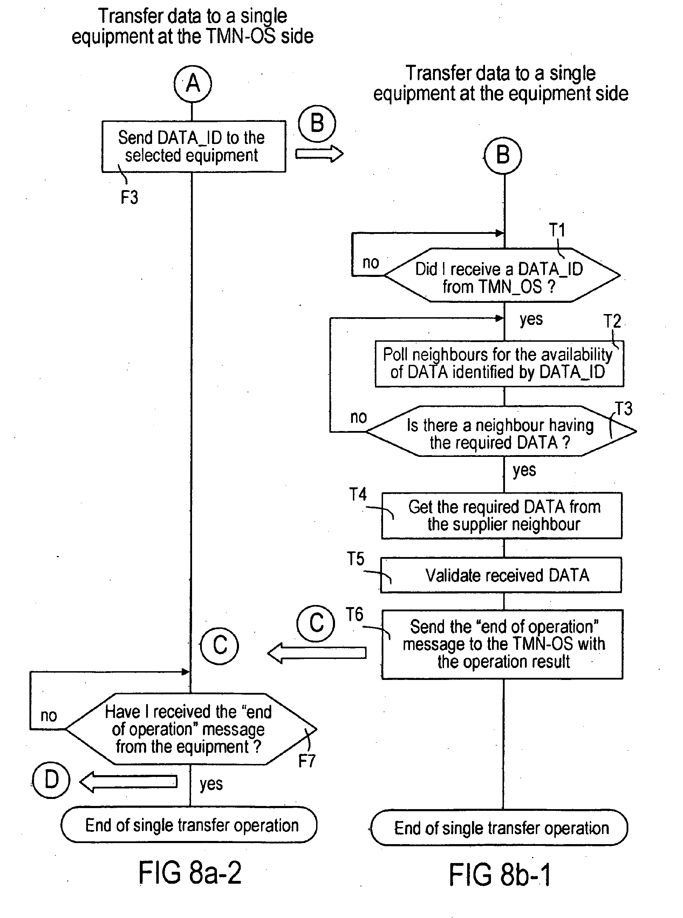

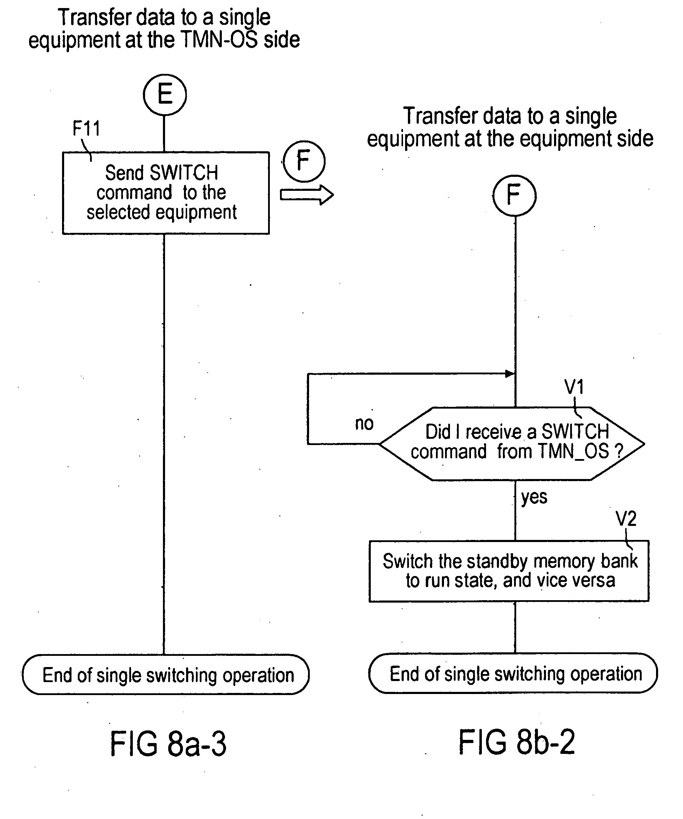

**Figures 8** show the flow charts of the downloading method illustrated in the previous **figures 2** to **7**, where the overall transfer process is completely under the control of TMN-OS, whilst single data transfer sessions are controlled directly by the equipments. The flow charts is subdivided in three following parts:
- **fig.8a-1** - Transfer data to a selected number of equipments at the TMN-OS side.
- **fig.8a-2** and **8a-3** - Reproposed steps of the previous flow-chart referred to data transfer to the single equipment.
- **fig.8b-1** and **8b-2** - Transfer data to a single equipment at the equipment side.

With reference to the above figures, the following steps are executed:
- (Step F1) TMN-OS starts selecting the equipments to which transfer the info from its Central Repository database using some kind of selection algorithm (e.g. availability, network topology, type of equipment).
- (Steps F2, F3, F4) TMN-OS sends to the chosen equipments the identifier (ID) of the piece of data to be transferred. The term ID is some both simple and short info that is sufficient to unique identify the piece of data (e.g. the version release number, in case of software download). Equipments that already have on board the requested data will reply immediately with an appropriate result message (this step is omitted in the figure).
- (Step F5) TMN-OS sends the updating DATA to a critical subset of equipments (in the present case the only SRAL-XD A). A preferred criterion to determine the critical subset is the one described in the introduction.
- (Step F6) TMN-OS stops the transfer procedure and it will simply wait for the operation completion signals that each of the involved equipment will sent (see later).
- (Steps T2, T3) Received the ID, each equipment starts to poll its neighbours to look for the availability of the requested data, using the supplied ID as key to identify the data itself. An equipment is identified as a neighbour when it is directly connected through either the same broadcast network or a point to point link (a table of all actual available neighbours has to be managed by each equipment).
- (Step T4) As soon as an equipment discovers a neighbour that declares the needed data as available, the equipment immediately stop to poll neighbours and starts the local (i.e. between these two equipments only) transfer procedure.
- (Steps T5,T6) When the transfer phase is terminated successfully, the data is validated and then a message is sent to the TMN-OS to inform it about the result of the operation.
- (Steps F7, F8) If TMN-OS receives a message "end of operation" with result "successful" from an equipment, it puts the equipment-ID into a list of "ready to switch" equipments.
- (F11) When TMN-OS chooses that a subset of equipments (or the whole network) is ready, it gives the switch command, once for equipment, to make the software appropriately use the new data.

On the basis of the above description some changes may be introduced in the exemplary embodiment by the skilled in the art without departing from the scope of the invention. It is thus contemplated that the present invention encompasses any and all such embodiments covered by the following claims.

### References

- [1]: CCITT: "Recommendation M.3010, Principles for a Telecommunications Management Network", Geneva 1996.
- [2]: STD 0005 (also RFC 0791, RFC 0792, RFC 0919, RFC 0922, RFC 0950, RFC 1112). "Internet Protocol", J. Postel, September 1981.
- [3]: STD 0007 (also RFC 0793), "Transmission Control Protocol", J. Postel, Sept. 01 1981.
- [4]: STD 0009 (also RFC 959) - File Transport Protocol (FTP), J. Postel, J. Reynolds, October 1985.

## Claims

1. Method for downloading data from a Telecommunications Management Network Operation System, called TMN OS, to involved equipments (e.g. SRAL-XD) of a Telecommunications Network (TN) controlled by said TMN OS, the downloaded data being temporarily stored in a standby memory of each involved equipment, said memory will be switched to the running state by an explicit request of the TMN OS once the stored data are validated by said equipments, **characterized in that** includes the steps of:
a) sending by the TMN (TMN-OS) to all involved equipments (SRAL-XD A, B, C, D, E, G) an identifier of the piece of data to be downloaded;
b) downloading said piece of data by the TMN (TMN-OS) to at least one (SRAL-XD A) involved equipment;
c) by involved equipments (SRAL-XD A, B, C, D, E, G), polling their neighbours to look for a data supplier, immediately after the receiving of said data identifier;
d) transferring said piece of data from a discovered supplier (SRAL-XD A, B, C, D) to the polling equipment;
e) sending a validation message to the TMN (TMN-OS) by each equipment (SRAL-XD A, B, C, D, E, G) on successfully data transfer completion.

2. The method of claim 1, **characterized in that** the downloaded data constitute an updated version that of the software run by the equipments.

3. The method of claim 2, **characterized in that** said identifier is the version release number of said piece of data.

4. The method of any preceding claim, **characterized in that** an equipment is identified as a neighbour by another one when it is directly connected through the other by one physical link.

5. The method of any preceding claim, **characterized in that** the equipments to be involved in data downloading are selected by the TMN (TMN-OS) on the basis of network topology.

6. The method of any preceding claim, **characterized in that** at step b) said piece of data are sent to a subset of equipments selected by the TMN (TMN-OS) on the basis of the individual delays along the routing paths to reach all remote equipments so as of minimizing the overall downloading propagation delay.

7. The method of any preceding claim, **characterized in that** said TMN (TMN-OS) after receiving said validation message at step e) puts the identifier of the sender into a list of ready to switch equipments.

8. The method of any preceding claim, **characterized in that** said TMN (TMN OS) groups the equipments by geographical areas and selectively requests to switch their standby memory into running state.

9. The method of claims 1 to 7, **characterized in that** said TMN (TMN OS) requests to switch said standby memory into running state choosing a low impact day-hour.

10. The method of any preceding claim, **characterized in that** each equipment is acting as an IP router capable to forward datagrams carrying supervisory data of said TMN (TMN OS) over data communication channels.

11. The method of claim 10, **characterized in that** each equipment acting as an IP router transfers said piece of data to a neighbour using a File Transfer Protocol known as FTP.

12. The method of any preceding claim, **characterized in that** said equipments involved in downloading are the transmission radio equipments (SRAL-XD) belonging to a low capacity plesiochronous digital hierarchy operating in the range of microwaves.

## Patentansprüche

1. Verfahren zum Herunterladen von Daten aus einem als TMN OS bezeichneten Telekommunikations-Verwaltungsnetz-Betriebssystem in beteiligte Geräte (z.B. SRAL-XD) eines Telekommunikationsnetzes (TN), das durch das TMN OS gesteuert wird, wobei die heruntergeladenen Daten vorübergehend in einem Standby-Speicher jedes beteiligten Geräts gespeichert werden, wobei der Speicher durch eine explizite Anforderung des TMN OS in den laufenden Zustand geschaltet wird, sobald die gespeicherten Daten durch die Geräte validiert wurden, **dadurch gekennzeichnet, dass** es die folgenden Schritte umfasst:
a) das TMN (TMN OS) sendet eine Kennung des herunterzuladenden Stücks Daten zu allen beteiligten Geräten (SRAL-XD A, B, C, D, E, G);
b) das TMN (TMN OS) lädt das Stück Daten in mindestens ein (SRAL-XD A) beteiligtes Gerät herunter;
c) beteiligte Geräte (SRAL-XD A, B, C, D, E, G) fragen unmittelbar nach dem Empfang der Datenkennung ihre Nachbarn ab, um nach einem Datenlieferanten zu suchen;
d) das Stück Daten wird von einem entdeckten Lieferanten (SRAL-XD A, B, C, D) zu den abfragenden Geräten transferiert;
e) jedes Gerät (SRAL-XD A, B, C, D, E, G) sendet bei erfolgreichem Datentransferabschluss eine Validierungsnachricht zu dem TMN (TMN OS).

2. Verfahren nach Anspruch 1, **dadurch gekennzeichnet, dass** die heruntergeladenen Daten eine aktualisierte Version der durch die Geräte ausgeführten Software darstellen.

3. Verfahren nach Anspruch 2, **dadurch gekennzeichnet, dass** die Kennung die Versions-Release-Nummer des Stücks Daten ist.

4. Verfahren nach einem der vorhergehenden Ansprüche, **dadurch gekennzeichnet, dass** ein Gerät durch ein anderes als ein Nachbar identifiziert wird, wenn es direkt durch eine physische Verbindung zu dem anderen durchverbunden ist.

5. Verfahren nach einem der vorhergehenden Ansprüche, **dadurch gekennzeichnet, dass** die an dem Datenherunterladen zu beteiligenden Geräte durch das TMN (TMN OS) auf der Basis von Netztopologie ausgewählt werden.

6. Verfahren nach einem der vorhergehenden Ansprüche, **dadurch gekennzeichnet, dass** im Schritt b) das Stück Daten zu einer Teilmenge von Geräten gesendet wird, die durch das TMN (TMN OS) auf der Basis der einzelnen Verzögerungen auf den Routing-Wegen zum Erreichen aller fernen Geräte ausgewählt wird, um so die Gesamt-Herunterlade-Ausbreitungsverzögerung zu minimieren.

7. Verfahren nach einem der vorhergehenden Ansprüche, **dadurch gekennzeichnet, dass** das TMN (TMN OS) nach dem Empfang der Validierungsnachricht im Schritt e) die Kennung des Absenders in einer Liste von umschaltbereiten Geräten ablegt.

8. Verfahren nach einem der vorhergehenden Ansprüche, **dadurch gekennzeichnet, dass** das TMN (TMN OS) die Geräte nach geografischen Gebieten gruppiert und selektiv anfordert, ihren Standby-Speicher in den laufenden Zustand zu schalten.

9. Verfahren nach Anspruch 1 bis 7, **dadurch gekennzeichnet, dass** das TMN (TMN OS) anfordert, den Standby-Speicher unter Auswahl einer Tageszeit mit geringer Auswirkung in den laufenden Zustand zu schalten.

10. Verfahren nach einem der vorhergehenden Ansprüche, **dadurch gekennzeichnet, dass** jedes Gerät als ein IP-Router wirkt, der Datagramme, die Beaufsichtigungsdaten des TMN (TMN OS) tragen, über die Datenkommunikationskanäle weiterleiten kann.

11. Verfahren nach Anspruch 10, **dadurch gekennzeichnet, dass** jedes als IP-Router wirkendes Gerät das Stück Daten unter Verwendung eines als FTP bekannten Dateitransferprotokolls zu einem Nachbar transferiert.

12. Verfahren nach einem der vorhergehenden Ansprüche, **dadurch gekennzeichnet, dass** die an dem Herunterladen beteiligten Geräte die Übertragungsfunkgeräte (SRAL-XD) sind, die zu einer im Mikrowellenbereich arbeitenden plesiochronen digitalen Hierarchie mit niedriger Kapazität gehören.

## Revendications

1. Procédé de téléchargement de données à partir d'un Système d'Exploitation de Réseau de Gestion de Télécommunications, appelé TMN OS, vers des équipements impliqués (par exemple SRAL-XD) d'un Réseau de Télécommunications (TN) commandé par ledit TMN OS, les données téléchargées étant temporairement mémorisées dans une mémoire en attente de chaque équipement impliqué, ladite mémoire sera mise à l'état fonctionnel par une demande explicite du TMN OS une fois que les données mémorisées auront été validées par lesdits équipements, **caractérisé en ce qu'**il inclut les étapes de :
a) envoi par le TMN (TMN-OS) à tous les équipements impliqués (SRAL-XD A, B, C, D, E, G) d'un identifiant de l'ensemble de données devant être téléchargé ;
b) téléchargement dudit ensemble de données par le TMN (TMN-OS) vers au moins un (SRAL-XD A) équipement impliqué ;
c) par les équipements impliqués (SRAL-XD A, B, C, D, E, G), scrutation de leurs voisins pour rechercher un fournisseur de données, immédiatement après la réception dudit identifiant de données ;
d) transfert dudit ensemble de données à partir d'un fournisseur découvert (SRAL-XD A, B, C, D) vers l'équipement de scrutation ;
e) envoi d'un message de validation au TMN (TMN-OS) par chaque équipement (SRAL-XD A, B, C, D, E, G) à la bonne fin du transfert de données.

2. Procédé selon la revendication 1, **caractérisé en ce que** les données téléchargées constituent une version mise à jour du logiciel utilisé par les équipements.

3. Procédé selon la revendication 2, **caractérisé en ce que** ledit identifiant est le numéro de publication de version dudit ensemble de données.

4. Procédé selon l'une quelconque des revendications précédentes, **caractérisé en ce qu'**un équipement est identifié comme un voisin par un autre lorsqu'il est directement connecté à l'autre par une liaison physique.

5. Procédé selon l'une quelconque des revendications précédentes, **caractérisé en ce que** les équipements devant être impliqués dans le téléchargement de données sont choisis par le TMN (TMN-OS) sur la base d'une topologie de réseau.

6. Procédé selon l'une quelconque des revendications précédentes, **caractérisé en ce qu'**à l'étape b) ledit ensemble de données est envoyé à un sous-ensemble d'équipements choisi par le TMN (TMN-OS) sur la base des délais individuels sur les voies d'acheminement pour atteindre tous les équipements distants de façon à minimiser le délai global de propagation du téléchargement.

7. Procédé selon l'une quelconque des revendications précédentes, **caractérisé en ce que** ledit TMN (TMN-OS) après réception dudit message de validation à l'étape e) met l'identifiant de l'expéditeur dans une liste d'équipements prêts à commuter.

8. Procédé selon l'une quelconque des revendications précédentes, **caractérisé en ce que** ledit TMN (TMN-OS) regroupe les équipements par zones géographiques et leur demande sélectivement de mettre leur mémoire en attente à l'état fonctionnel.

9. Procédé selon les revendications 1 à 7, **caractérisé en ce que** ledit TMN (TMN-OS) demande de mettre ladite mémoire en attente à l'état fonctionnel en choisissant un jour et une heure à faible impact.

10. Procédé selon l'une quelconque des revendications précédentes, **caractérisé en ce que** chaque équipement agit comme un routeur IP apte à envoyer des datagrammes transportant des données de supervision dudit TMN (TMN-OS) sur des canaux de communication de données.

11. Procédé selon la revendication 10, **caractérisé en ce que** chaque équipement agissant comme un routeur IP transfère ledit ensemble de données jusqu'à un voisin en utilisant un Protocole de Transfert de Fichiers connu comme FTP.

12. Procédé selon l'une quelconque des revendications précédentes, **caractérisé en ce que** lesdits équipements impliqués dans le téléchargement sont les équipements radio de transmission (SRAL-XD) appartenant à une hiérarchie numérique plésiochrone de faible capacité fonctionnant dans la plage des micro-ondes.
